# EUROPEAN PATENT APPLICATION

(11) **EP 1 832 166 A2**
(43) Date of publication of application: **12.09.2007**
(21) Application number: 07380057.5
(22) Date of filing: 05.03.2007
(51) Int. Cl.: A01M 1/14

(54) **Ecologic flying insect eliminator**

(30) Priority: 07.03.2006 ES 200600550; 26.02.2007 ES 200700495
(71) Applicant: Electronica Escuder S.A., 12580 Benicarlo Castellón (ES)
(72) Inventor: Escuder Avila, Manuel, 12580 Benicarlo (Castellon) (ES)
(74) Representative: Aragones Forner, Rafael Angel

(57) **Abstract**

The invention consists in a casing (1) having an elongated configuration with a polygonal cross-section and comprising an inlet opening (2) for the ingress of the insects, an access door (3) for maintenance being fit to be tilted between an open position and a closed position, a longitudinal slit (4) for after its having been used proceeding to the removal of a flexible sheet material (6) having one of its sides provided with a sticky and insect-attracting mixture, longitudinal light-emitting means (7) facing the inlet opening, means (9a,9b) for gripping and positioning the flexible sheet material, a longitudinal housing (11) containing the active components of the electronic circuit, and hanging means. The longitudinal slit is defined by the gap between two halves making up the casing, or else it consists in an elongated opening being provided in one of said halves.

## Description

### OBJECT OF THE INVENTION

The present invention has as its object an ecological flying insect eliminator.

### FIELD OF THE INVENTION

The ecological flying insect eliminator of the present invention is ideally suited to be installed in any chosen location and is perfectly applicable in shops and even in those selling foods since the flying insects get stuck to a side of the sheet material being provided with a sticky and possibly attractive mixture and they do not fall off to the outside, and it is also applicable in the home.

### BACKGROUND OF THE INVENTION

Flying insect eliminators are currently available in the market in two types namely being those having their operation based on an electric discharge and those having their operation based on a sticky and possibly attractive mixture. Those using an electric discharge have light-emitting means being fit to attract the insects and have their operation based on an electric discharge being produced by means of two alternate grids being each connected to a different potential and thus producing a discharge. This type of eliminator is generally adequate but for some types of locations it is not, because the electrocuted insect can fall on foods and the like.

There are in the market flying insect eliminators having an ecological operation, said eliminators consisting in a flexible sheet material having one of its sides impregnated with a sticky and possibly insect-attracting mixture being fit to attract the flying insects, these latter then getting stuck to said mixture till they die. There also exist devices incorporating light-emitting means also being fit to attract the insects, these latter in their trajectory flying into the side of the flexible sheet material being provided with the aforementioned mixture.

The known models of eliminators of the sticky and possibly attractive mixture type have several drawbacks from among which can be cited a given degree of difficulty in placing the flexible sheet material with the sticky and possibly flying insect-attracting mixture and the unpleasant removal of said sheet material after the operation with a great number of dead insects being stuck to the mixture impregnating the side of the sheet material, this latter having an unpleasant appearance.

In order to obviate these drawbacks regarding the unpleasant sensation being perceived by the user when he or she is forced to see the dead insects being stuck to the sheet material several inventions have been carried out wherein the flexible sheet material such as paper, cardboard or the like is folded on itself by previously providing it with folds in such a way that when folding the paper on itself the surfaces being provided with adhesive and having the dead insects stuck to them are then arranged in a mutually superimposed arrangement and thus prevent the dead insects from being visible.

From among the documents disclosing this type of insect trapping paper devices can be cited the USA patent No. 395,640 to W&O. THUM. The USA patent No. 813,196 to J.H. BIEN arranges the paper in a mutually superimposed arrangement in two halves having the same surface. The USA patents Nos. 968,237 to J.N. DEAN and 1,459,711 to A. BANKS carry out a longitudinal and radial folding of the paper strip.

The USA patent No. 5,634,293 to A. and J. MIKE comprises two embodiments, one of them consisting in a planar device being provided with a transversal slit through which the paper is removed with its smooth side on the outside, the two halves being provided with adhesive and having the dead insects stuck to them when passing through the slit being folded upon one another, their folded arrangement thus concealing the dead insects. Another embodiment of the invention consists in a parallelepipedic box having a major base provided with a slit for the removal of the sheet material being provided with a V-shaped fold being in correspondence with the slit of the box, this latter having the lateral walls provided with holes for the insects to fly in through them as a result of their being attracted by the attractive compounds being mixed with the adhesive being provided on one of the sides of the sheet material.

Patent GB 2415121 to P&L SYSTEMS, LTD. is essentially the same embodiment as the USA patent having been mentioned above and is made up by an essentially parallelepipedic casing having one of the major sides provided with a transversal slit through which the sheet material with adhesive and insect attractants is removed. In said removal the sheet material is folded upon itself in two halves wherein the sides being thus arranged in a mutually superimposed arrangement are those being provided with adhesive and attractants and having the dead insects stuck to them, in such a way that when proceeding to remove said sheet material upon the performance of its operation the dead insects are not visible for the user.

### SUMMARY OF THE INVENTION

The ecological flying insect eliminator of the present invention is essentially characterised in that the casing has an elongated configuration with a polygonal cross-section and comprises two main portions, one of them being fixed and fit to be secured to a wall facing and the other one being tiltable with respect to the fixed one, said two portions defining a laterally and inferiorly closed and upperly open enclosure wherein the upper opening is defined by the upper edges of both portions and makes up the inlet opening being provided for the ingress of the flying insects and having an elongated configuration; said fixed portion acting as a support for the light-emitting means being provided to attract the insects and longitudinally facing the elongated opening for the ingress of the insects, the housing for the actuating electronic circuit, the means for gripping and positioning the flexible sheet material thereby keeping it arranged in a superimposed arrangement against the casing and placed behind the light-emitting means and with its active side facing said means during its operation, and the means for hanging said casing from the corresponding wall facing; the aforementioned tiltable portion occupying at least the front portion of the casing, having at least one vertical/cross-section having an essentially U-shaped configuration, and making up the access door for maintenance purposes, said tiltable portion being at the upper ends fitted to respective complementary tilting means being provided at the fixed and tiltable portions, said tiltable portion being thus in a position to be tilted between a raised, open position for maintenance and a lowered, closed position for the operation; the casing inferiorly having a longitudinal slit for the removal of the flexible sheet material upon its having been used, said removal of the flexible sheet material through the longitudinal slit being carried out by overlapping two mutually facing halves of the active side having the dead insects stuck to it, these latter being thus sandwiched between said halves and concealed by the folded arrangement.

According to a first preferred embodiment the casing comprises the longitudinal inlet opening being provided for the ingress of the flying insects and defined by the continuous upper edge of the two portions of the casing, a tiltable access door for maintenance being made up by the tiltable portion and adapted to be tilted between an open position and a closed position wherein the gap between the adjacent, longitudinal edges of the fixed portion side and the access door side makes up the longitudinal slit for the removal of the flexible sheet material after its use, said flexible sheet material being provided with removal means being fixedly attached to the free side, said casing incorporating the longitudinal, light-emitting means facing the longitudinal inlet opening, means for gripping and positioning the flexible sheet material thereby keeping it arranged in a superimposed arrangement against the inner surface of the casing and placed behind the light-emitting means, a longitudinal housing for the electronic circuit being exteriorly secured to the fixed portion, and means for hanging said casing from a wall facing.

According to a second preferred embodiment the casing comprises two separate parts, one of them being a fixed part being adapted to be secured to a wall facing, and the other one being tiltable with respect to the fixed one, said parts defining a laterally and inferiorly closed and upperly open enclosure whose upper opening makes up the inlet door for the ingress of the flying insects, the fixed part being made up by one piece having an essentially L-shaped cross-section whose vertical branch makes up the support for securing the casing to the wall facing and has the light-emitting means consisting of tubes and/or LED's and the housing for the electronic circuit fixedly attached to it, said fixed part having means for gripping and positioning the flexible sheet material thereby keeping it arranged in a superimposed arrangement against the casing and placed behind the light-emitting means during its operation, the other branch being arranged in a slightly inclined, downwardly slanted arrangement and provided with the longitudinal slit for the removal of the flexible sheet material after its having been used, the tiltable part occupying the front portion of the casing and being essentially U-shaped in both the longitudinal section and the vertical/cross-section, said tiltable part being at the upper ends fitted to respective complementary tilting means being provided at both the fixed and the tiltable parts, said tiltable part being thus in a position to be tilted between a raised, open position and a lowered, closed position, said fixed and tiltable parts being additionally provided with several spaced and mutually facing brackets whose free edges are curved so as to thus be in a position to have the flexible sheet material duly positioned in combination with the gripping and positioning means being provided at the upper edges of both the fixed and the tiltable part, the light-emitting means and the housing for the electronic circuit being fitted to the middle portion of an elongated, U-shaped flat being fitted to the fixed part at the ends of the U's branches.

According to a first variant of the second preferred embodiment the tiltable part occupies the front and essentially the lateral sides of the fixed part, and in a second variant the tiltable part occupies essentially the front of the fixed part and is inferiorly and innerly extended especially in the central region and at the lateral sides has a plurality of consecutive fins.

These and other characterising features will be best made apparent by the following detailed description whose understanding will be made easier by the accompanying three sheets of drawings showing a practical embodiment being cited only by way of example not limiting the scope of the present invention.

### DESCRIPTION OF THE DRAWINGS

Fig. 1 is a perspective view of the ecological flying insect eliminator of the present invention in the first preferred embodiment with the casing in the open position and the flexible sheet material being on the active side provided with the sticky and attractive mixture.
Fig. 2 is a perspective view of the eliminator of Fig. 1 in a closed, operating position with the lights activated.
Fig. 3 is a cross-sectional view of the closed and operating casing of Fig. 1 with the lights activated showing the insects and the like being attracted by the light and thus penetrating into the inside of the casing and being thus trapped on the mixture impregnating the active side of the flexible sheet material.
Fig. 4 is a cross-sectional view being similar to that of Fig. 3 and showing the removal of the flexible sheet material with the trapped insects, both its halves being arranged in a mutually overlapping arrangement, the dead gnats thus not being visible for the user.
Fig. 5 is a diagrammed, fragmentary plan-view of the casing of Fig. 1 as per the present invention.
Fig. 6 is a perspective view from slightly above of the eliminator of the invention as per a second preferred embodiment in a first variant.
Fig. 7 is an exploded view of the eliminator of Fig. 6.
Fig. 8 is a cross-sectional view of the eliminator of Fig. 6 as per section line A-A in Fig. 14 showing the flexible sheet material once having been duly placed in the casing in operating position.
Fig. 9 is a cross-sectional view being similar to Fig. 8 but showing the removal of the flexible sheet material with dead insects stuck to the active side of the two mutually overlapping halves.
Fig. 10 is a cross-sectional view being similar to Figs. 8 and 9 but with the tiltable front part in a raised position in order to replace the flexible sheet material, the tubes or the LED's or to carry out a simple checking.
Fig. 11 is a bottom view of the fixed part of the casing showing the intermediary, longitudinal slit.
Fig. 12 is a front view of the eliminator of Fig. 6 showing the tiltable part.
Fig. 13 is a side elevational view of the eliminator corresponding to Figs. 8 and 9.
Fig. 14 is a top plan view of the eliminator of Fig. 6.
Fig. 15 is a back view of the eliminator of Fig. 6.
Fig. 16 is a front view of the eliminator of the second preferred embodiment as per the second variant.
Fig. 17 is a side elevational view of the eliminator of Fig. 16 corresponding to the second embodiment and the second variant.

### DETAILED DESCRIPTION OF A PREFERRED EMBODIMENT

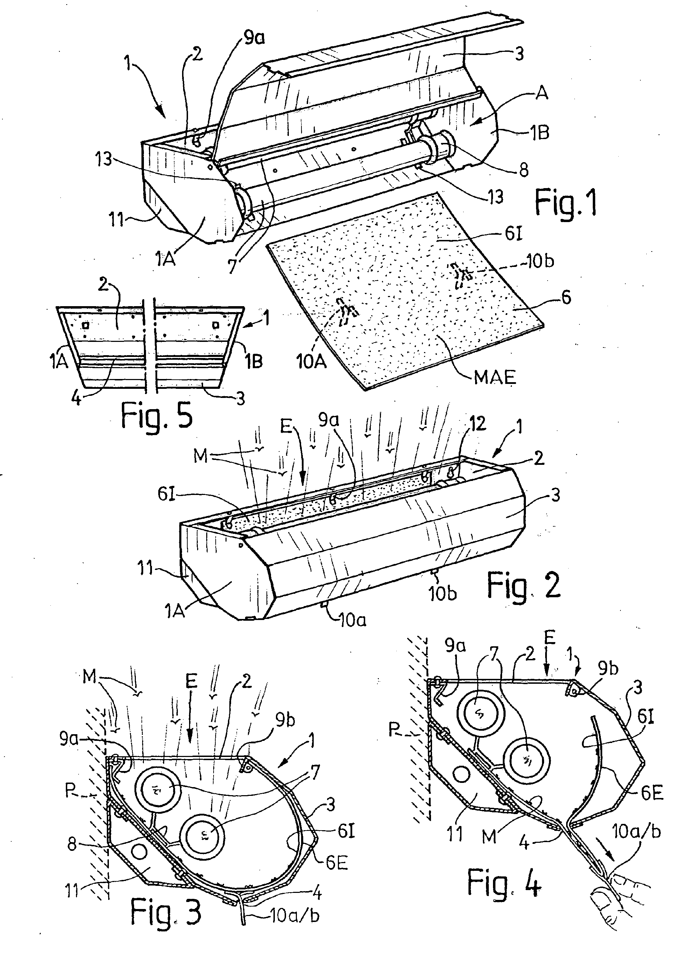

According to the drawings and referring to Figs. 1 through 5 illustrating a first preferred embodiment the ecological eliminator of the invention comprises a casing being generally designated at -1- and having an elongated configuration with a polygonal cross-section and comprising one -2- of the longitudinal sides being open and making up the inlet opening for the ingress of the winged, flying insects and the like -M- into the inside of the casing, and several adjacent, major sides being formed by one only plate with folds making up the access door -3- for maintenance forming the tiltable portion of the casing -1-.

Said access door -3- is articulately fitted at its ends and adjacent to the inlet opening -2-. The access door -3- is fit to be tilted between an open position giving access -A- to the user (see Fig. 1) and a closed position (see Figs. 2, 3 and 4) defining a longitudinal slit -4- with the edge of the adjacent side of the fixed portion of the casing, said longitudinal slit allowing to carry out the removal of the used up flexible sheet material -6- being on the inner, active side -61-provided with the sticky and insect-attracting mixture.

The casing incorporates in its inside the longitudinal, light-emitting means -7- facing the inlet opening, said means being supported by respective end supports -8-.

The casing is as well provided with means -9a-, -9b-for gripping and positioning the flexible sheet material being provided with the sticky and attractive mixture - MAE-, said means being fit to keep said flexible sheet material arranged in a superimposed arrangement against the closed inner surface of the casing (see especially Figs. 3 and 4) and placed behind the light-emitting means -7- (see Figs. 3 and 4). Said flexible sheet material has a length being in correspondence with the longitudinal slit -4- and a width being in correspondence with the closed inner polygonal surface of the casing (see Fig. 3) and incorporates removing means -10a-, -10b- being arranged in a projecting arrangement and fixedly attached to the outer side -6E- and in correspondence with the longitudinal slit -4- for the removal of the aforementioned flexible sheet material by having it pulled out while at the same time having the two halves arranged in a mutually overlapping arrangement as they come out at both sides of the slit -4- with their active side being provided with the mixture -MAE- and with the trapped insects or gnats -M- and the like. The casing is completed with a continuous, longitudinal housing -11-having a complementary cross-section and being exteriorly attached to a longitudinal side of the casing -1- and containing the active components. The casing -1- does as well comprise means -12- for hanging it from a wall -P-.

As can be seen in the figures, the casing -1- has the end sides -1A-, -1B- being arranged at an angle with respect to the longitudinal axis, as shown in Fig. 5, i.e. in a frontally converging arrangement.

The light-emitting means -7- in their turn preferentially comprise two of the aforementioned tubes being arranged in a parallel arrangement.

As has been described, the flexible sheet material being used in the invention consists in a sheet of the type of a paper, a cardboard or the like having the inner, active side impregnated with the sticky and attractive mixture and on the outer side incorporating the removing means -10a/b- consisting in two parts being made up as a by way of Y and having their branches fixedly attached to the outer side -6E-, their trunk allowing the user to get a grip on them.

The casing -1- does as well have means -13- for guiding the flexible sheet material for its removal and its positioning during the operation in rest position in a superimposed arrangement against the casing.

The means for gripping the flexible sheet material - 6- can in their turn be the grippers -9a-, -9b-, or else they can be a folded, longitudinal fin fixedly holding the ends of said sheet material, or they can be made in any other shape as convenient.

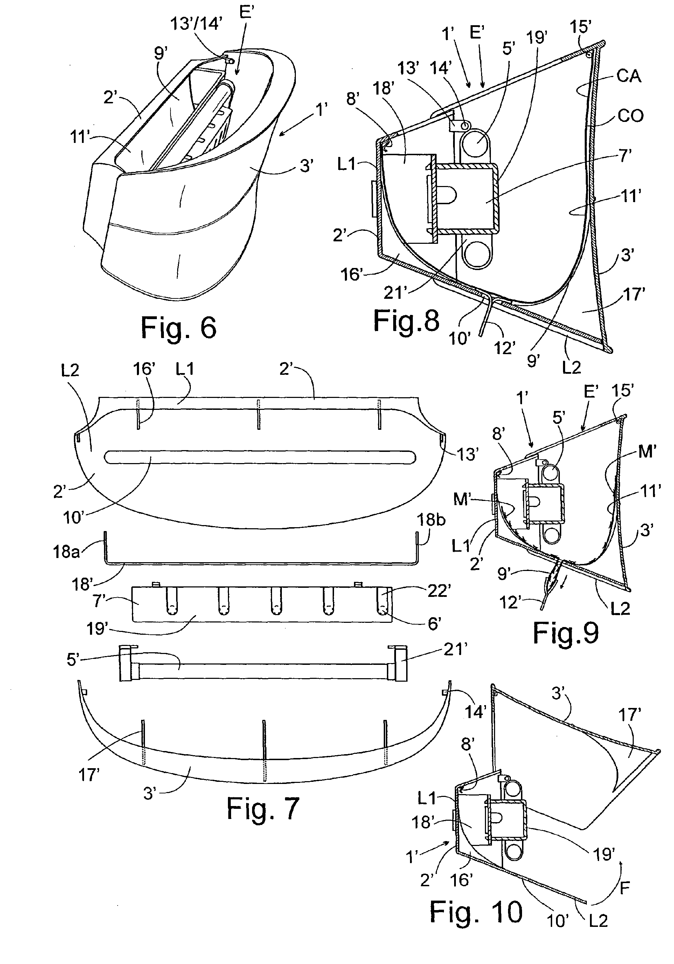

According to the invention and referring to Figs. 6 through 17 corresponding to a second preferred embodiment, and in principle to Figs. 6 through 15 pertaining to a first variant, the flying insect eliminator having an ecological operation as per the invention consists in a casing -1'- comprising separate portions or parts -2'- and -3'-, one -2'- of them being a fixed part being fit to be secured to a wall facing and the other one -3'- being tiltable with respect to the fixed one, said portions or parts defining a laterally and inferiorly closed and upperly open enclosure (see Figs. 1, 3 and 4) whose upper opening makes up the inlet door -E'- for the ingress of the flying insects -M'-. The fixed part -2'- is made up by a piece having an essentially L-shaped cross-section whose vertical branch -L1- makes up the support for securing the casing to the wall facing through the use of conventional support means -4'- and has fitted to it the light-emitting means consisting of tubes -5'- and/or LED's -6'- and the housing -7'- for the electronic circuit and its components, as well as means -8'- for gripping and positioning the flexible sheet material -9'- thereby keeping it arranged in a superimposed arrangement against the casing -1'- and placed behind the light-emitting means -5'-, -6'- during its operation, the other branch - L2- of said fixed part being arranged in a slightly inclined, downwardly slanted arrangement and provided with the longitudinal slit -10'- for the removal of the flexible sheet material -9'- after its having been used, this latter being on the active side -CA- facing the light-emitting means -5'-, -6'- provided with the sticky mixture -11'- being also possibly attractive for the flying insects, said flexible sheet material on the opposite side -CO- having the means -12'- for removing the flexible sheet material -9'- through the slit -10'-after its operation.

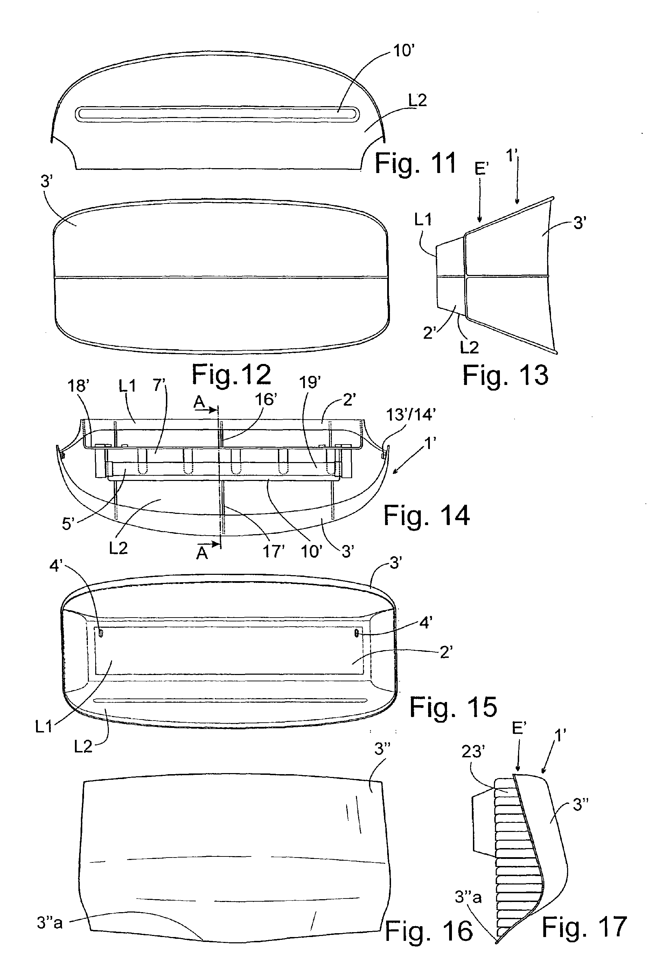

The tiltable part -3'- occupies the front of the casing -1'- and the first variant (Figs. 6-15) is essentially U-shaped both in the longitudinal section and the vertical/cross-section, said tiltable part being at the upper ends fitted to respective complementary tilting means -13', 14'- being provided at both the fixed part - 2'- and the tiltable part -3'-, the tiltable part being thus in a position to be tilted between a raised, open position (see Fig. 10) and a lowered, closed position for the operation (see Figs. 6, 8 and 9) and in said raised, open position once having been raised as per arrow -F-(Fig. 10) allowing to carry out the maintenance for the replacement of the flexible sheet material -9'- being prepared to attract and kill the flying insects, in the lowered, closed position said tiltable part engaging the edge of the inclined branch of the fixed portion (Figs. 6, 8 and 9) and thus maintaining the flexible sheet material -9'- in an operating position through the use of corresponding retaining means -15'-, said fixed part -2'-and tiltable part -3'- being additionally provided with several spaced and mutually facing brackets -16'-, -17'-, respectively, the free edges of all of said brackets being curved in order to thus better support and guide the flexible sheet material -9'- both during its operation and in its removal, all this in combination with the aforementioned gripping and positioning means - 8'- and -15'- being provided at the upper edges of the two parts namely being the fixed part -2'- and the tiltable part -3'- for gripping and positioning the end sides of said flexible sheet material -9'-.

The light-emitting means -5'-, -6'- and the housing -7'- for the actuating electronic circuit are fitted to a flat -18'- being made of a convenient material and having a generally U-shaped configuration with an elongated middle portion, said flat being fitted to the fixed part -2'- at the ends of the branches -18a- and -18b- of the U. A parallelepipedic box -19'- is fitted to said U-shaped flat -18'- and is fit to house the actuating electronic circuit, said box lacking the side being fitted to the middle portion of the U-shaped flat -18'-, said box being provided with lateral slits -22'- for the fitting of LED's.

The light-emitting means of the type of tubes -5'-are fitted by means of the corresponding tube supports - 21'- directly to the flat -18'- at at least one of the sides of the box, and those of the type of LED's, as has been said, are fitted into slits -22'- being provided at both sides of the box.

In the first variant of the second preferred embodiment of the invention the tiltable part -3'-occupies the front and essentially the lateral sides of the fixed part -2'-.

In the second variant of the second preferred embodiment of the invention (see Figs. 16 and 17) the tiltable part -3"- occupies essentially the front of the fixed part -2'- and is inferiorly and innerly extended especially in the central region -3''a- and at the lateral sides has a plurality of consecutive fins -23'-occupying said lateral sides.

## Claims

1. An ecological flying insect eliminator of the type comprising a casing being provided with an inlet opening for the ingress of the flying insects, light-emitting means for attracting the insects, a flexible sheet material having an active side provided with a sticky and possibly insect-attracting mixture, said insects being thus stuck to it and killed, said material being during the operation kept in position in the inside of the casing, a slit for the removal of the used up flexible sheet material, in said removal the active side being folded upon itself in two mutually facing halves with the stuck and dead insects sandwiched and concealed between both halves, an access for maintenance, a housing containing the active components of the electronic circuit, and hanging means; **characterised in that** the casing (1, 1') has an elongated configuration with a polygonal cross-section and comprises two main portions (2, 2', 3, 3'), one (2, 2') of them being fixed and fit to be secured to a wall facing and the other one (3, 3') being tiltable with respect to the fixed one, said two portions defining a laterally and inferiorly closed and upperly open enclosure wherein the upper opening is defined by the upper edges of both portions and makes up the inlet opening (E, E') being provided for the ingress of the flying insects (M, M') and having an elongated configuration; said fixed portion (2, 2') acting as a support for the light-emitting means (7, 5', 6') being provided to attract the insects and longitudinally facing the elongated opening (E, E') for the ingress of the insects, the housing (11, 7') for the actuating electronic circuit, the means (8', 15') for gripping and positioning the flexible sheet material (6, 9') thereby keeping it arranged in a superimposed arrangement against the casing (1') and placed behind the light-emitting means (7, 5', 6') and with its active side facing said means during its operation, and the means for hanging said casing from the corresponding wall facing; the aforementioned tiltable portion (3, 3') occupying at least the front portion of the casing (1, 1'), having at least one vertical/cross-section having an essentially U-shaped configuration, and making up the access door (3, 3') for maintenance purposes, said tiltable portion being at the upper ends fitted to respective complementary tilting means (9b, 13', 14') being provided at the fixed portion (2, 2') and at the tiltable portion (3, 3'), said tiltable portion being thus in a position to be tilted between a raised, open position for maintenance and a lowered, closed position for the operation; the casing inferiorly having a longitudinal slit (10, 10') for the removal of the flexible sheet material (6, 9') upon its having been used, said removal of the flexible sheet material through the longitudinal slit (10, 10') being carried out by overlapping two mutually facing halves of the active side having the dead insects stuck to it, these latter being thus sandwiched between said halves and concealed by the folded arrangement.

2. An eliminator as per claim 1, **characterised in that** the casing (1) having an elongated configuration and a polygonal cross-section comprises the longitudinal inlet opening (E) being provided for the ingress of the flying insects (M) and defined by the continuous upper edge of the two portions of the casing, a tiltable access door (A) for maintenance being made up by the tiltable portion (3) and adapted to be tilted between an open position and a closed position wherein the gap between the adjacent, longitudinal edges of the fixed portion side and the access door (3) side makes up the longitudinal slit (4) for the removal of the flexible sheet material (6) after its use, said flexible sheet material (6) being provided with removal means (10a/10b) being fixedly attached to the free side (6E), said casing incorporating the longitudinal, light-emitting means (7) facing the longitudinal inlet opening (E), means (9a/9b) for gripping and positioning the flexible sheet material (6) thereby keeping it arranged in a superimposed arrangement against the inner surface of the casing (1) and placed behind the light-emitting means (7), a longitudinal housing (11) for the electronic circuit being exteriorly secured to the fixed portion, and means (12) for hanging said casing from a wall facing.

3. An eliminator as per claim 2, **characterised in that** the inlet opening (E) for the ingress of the flying insects is made up by the longitudinal upper side (2) of the casing (1), said longitudinal upper side preferentially having a bigger surface, and **in that** the tiltable access door (3) for maintenance is made up by one only plate (3) being provided with folds making up the edges of several sides of the casing, said one only plate being adjacent to the inlet opening (E).

4. An eliminator as per claim 2, **characterised in that** the flexible sheet material (6) has a length being in correspondence with the longitudinal slit (4) and a width being in correspondence with the closed inner polygonal surface of the casing (1), said flexible sheet material once having been used being removed by having it pulled out through the slit (4) while at the same time having the two halves arranged in a mutually overlapping arrangement with their inner side (6I) being provided with the mixture (MAE) and with the trapped insects (M).

5. An eliminator as per claim 2, **characterised in that** the casing (1) has the end sides being arranged at an angle with respect to the longitudinal axis, i.e. in a frontally converging arrangement.

6. An eliminator as per claim 2, **characterised in that** the light-emitting means (7) comprise at least one fluorescent tube emitting an insect-attracting light, and preferentially two (7, 7) of said tubes being arranged in a parallel arrangement.

7. An eliminator as per claim 2, **characterised in that** the flexible sheet material (6) consists in a sheet of the type of a paper, a cardboard or the like having the inner, active side impregnated with the sticky and possibly attractive mixture (MAE) and on the outer side incorporating the removing means (10a, 10b) consisting in two parts being made up as a by way of Y and having their branches fixedly attached to the outer side, their trunk allowing to get a grip on them.

8. An eliminator as per claim 2, **characterised in that** the casing (1) has means (13) for guiding the flexible sheet material (6) for its removal and its positioning during the operation in rest position in a superimposed arrangement against the casing.

9. An eliminator as per claim 1, **characterised in that** the casing (1') comprises two separate parts (2', 3'), one (2') of them being a fixed part being fit to be secured to a wall facing and the other one (3') being tiltable with respect to the fixed one, said parts defining a laterally and inferiorly closed and upperly open enclosure whose upper opening being defined by the upper edges of both the fixed part (2') and the tiltable part (3') makes up the inlet door (E') for the ingress of the flying insects (M'); the fixed part (2') is made up by a piece having an essentially L-shaped cross-section whose vertical branch (L1) makes up the support for securing the casing to the wall facing through the use of conventional support means (4') and has fitted to it the light-emitting means consisting of tubes (5') and/or LED's (6') and the housing (7')- for the actuating electronic circuit, said fixed part having means (8') for gripping and positioning the flexible sheet material (9') thereby keeping it arranged in a superimposed arrangement against the casing (1') and placed behind the light-emitting means (5', 6') during its operation, the other branch (L2) of said fixed part being arranged in a slightly inclined, downwardly slanted arrangement and provided with the longitudinal slit (10') for the removal of the flexible sheet material (9') after its having been used; the tiltable part (3') occupies the front of the casing (1') and is essentially U-shaped both in the longitudinal section and the vertical/cross-section, said tiltable part being at the upper ends fitted to respective complementary tilting means (13', 14') being provided at both the fixed part (2') and the tiltable part (3'), the tiltable part being thus in a position to be tilted between a raised, open position (F) and a lowered, closed position and in said raised, open position allowing to carry out the maintenance, in the lowered, closed position said tiltable part engaging the edge of the inclined branch (L2) of the fixed portion (2') and thus maintaining the flexible sheet material (9') in an operating position through the use of corresponding gripping means (15'), said fixed part (2') and tiltable part (3') being additionally provided with several spaced and mutually facing brackets (16', 17') whose free edges are curved in order to thus support and guide the flexible sheet material in its positioning in combination with the aforementioned gripping and positioning means (8', 15') being provided at the upper edges of the two parts namely being the fixed part (2') and the tiltable part (3') for gripping and positioning the ends of said flexible sheet material.

10. An eliminator as per claim 9, **characterised in that** the light-emitting means (5', 6') and the housing (7') for the actuating electronic circuit are fitted to a flat (18') being made of a convenient material and having a generally U-shaped configuration with an elongated middle portion, said flat being fitted to the fixed part (2') at the ends of the branches (18a, 18b) of the U.

11. An eliminator as per claim 9, **characterised in that** the housing (7') for the electronic circuit consists in a parallelepipedic box (19') being adapted to be fitted to the middle portion of the U-shaped flat and provided with lateral slits for the fitting of LED's.

12. An eliminator as per claim 9, **characterised in that** the tubes (5') are directly fitted to the flat (18') by means of tube holders or supports (21') at at least one of the sides of the box (19').

13. An eliminator as per claim 9, **characterised in that** the tiltable part (3') occupies the front and essentially the lateral sides of the fixed part (2').

14. An eliminator as per claim 9, **characterised in that** the tiltable part (3'') occupies essentially the front of the fixed part (2') and is inferiorly and innerly extended especially in the central region (3''a) and at the lateral sides incorporates a plurality of consecutive fins (23') occupying said lateral sides.
